# NEW EUROPEAN PATENT SPECIFICATION

(11) **EP 3 727 784 B2**
(45) Date of publication and mention of the opposition decision: **08.07.2026**
(45) Mention of the grant of the patent: 20.09.2023
(21) Application number: 18839540.4
(22) Date of filing: 13.12.2018
(51) Int. Cl.: B65D 41/34, B65D 55/16, B29K 23/00, B29K 105/00, B29L 31/56

(54) **BOTTLE CLOSURE ASSEMBLY COMPRISING A POLYETHYLENE HOMOPOLYMER COMPOSITION**
FLASCHENVERSCHLUSSANORDNUNG MIT EINER POLYETHYLENHOMOPOLYMERZUSAMMENSETZUNG
ENSEMBLE DE FERMETURE DE BOUTEILLE COMPRENANT UNE COMPOSITION D'HOMOPOLYMÈRE DE POLYÉTHYLÈNE

(30) Priority: 19.12.2017 US 201762607343 P
(43) Date of publication of application: 28.10.2020
(73) Proprietor: Nova Chemicals (International) S.A., 1700 Fribourg (CH)
(72) Inventor: WANG, Xiaochuan, Calgary, Alberta T3G 5P7 (CA); GIBBONS, Ian, Calgary, Alberta T3L 2B9 (CA); VIGNOLA, Eric, Airdrie, Alberta T4B 2X1 (CA); BAAR, Cliff, Calgary, Alberta T3G 5L9 (CA); MIRZADEH, Amin, Calgary, Alberta T2P 0V2 (CA)
(74) Representative: Mewburn Ellis LLP
(86) International application number: PCT/IB2018/060063
(87) International publication number: WO 2019/123157

(56) References cited:
- EP-A1- 1 790 580
- WO-A1-2017/029571
- WO-A1-2018/055493
- US-A1- 2015 203 671
- US-A1- 2015 251 827

## Description

The present disclosure is directed to bottle closure assemblies which are made at least in part with a polyethylene homopolymer composition. The bottle closure assembly comprises a cap portion, an elongated tether portion and a retaining collar portion.

### BACKGROUND ART

The manufacture of simple one-piece closures using polyethylene compositions is well known to persons skilled in the art.

Bottle closure systems and designs incorporating an integrated tethering means, which secures a cap portion to a bottle after the cap portion has been removed from a bottle opening are also well known. Such designs typically involve molding processes which present a more complicated and longer flow path for a chosen plastic material relative to simple one-piece closure designs. As such, it would be beneficial to make tethered closure systems using a thermoplastic material which shows good performance in molding applications, especially those which involve longer and more tortuous flow paths in a mold. It would also be advantageous to make a tethered closure system using a material that has sufficient stress crack resistance and flexibility, as the tethering portion would need to be both strong enough to prevent loss of the cap portion once it has been removed from a bottle opening, and flexible enough to allow the tethering portion to be formed or bent into suitable closure system designs.

US 2015/251827 A1 discloses a bottle closure assembly according to the preamble of claim 1. WO 2018/055493, state of the art pursuant to Article 54(3) EPC, discloses polyethylene blends which may be used in the formation of molded articles such as caps and closures or in the formation of films. The polyethylene blends comprise a polyethylene homopolymer composition.

### SUMMARY OF INVENTION

The present disclosure concerns bottle closure assemblies comprising a cap portion, an elongated tether portion and a retaining collar portion, where the bottle closure assembly is made at least in part from a polyethylene homopolymer composition.

The present invention is defined by independent claim 1 and provides a bottle closure assembly which comprises a cap portion, an elongated tether portion and a retaining collar portion, the cap portion being molded to reversibly engage and cover a bottle opening, the retaining collar portion being molded to irreversibly engage a bottle neck or an upper portion of a bottle, and where the elongated tether portion connects at least one point on the cap portion to at least one point on the retaining collar portion, where the elongated tether portion comprises a tether strip which is frangibly connected along a portion of its upper edge to a descending annular edge of the cap portion and which is frangibly connected along a portion of its lower edge to an upper annular edge of the retaining collar portion, the tether strip being integrally formed with and connected at one end to at least one point on the cap portion and integrally formed with and connected at another end to at least one point on the retaining collar portion, the frangible sections being breakable when the cap portion is removed from a bottle opening, but where the cap portion remains connected to the retaining collar via the tether strip; the cap portion, the elongated tether portion, and the retaining collar portion are integrally molded from a polyethylene homopolymer composition comprising: (I) 95 to 5 weight% of a first ethylene homopolymer having a density of from 0.950 to 0.975 g/cm³; and (II) 5 to 95 weight% of a second ethylene homopolymer having a density of from 0.950 to 0.975 g/cm³, wherein the ratio of the melt index I₂ of the second ethylene homopolymer to the melt index I₂ of the first ethylene homopolymer is at least 10, wherein the density is measured according to ASTM D792 and the melt index I₂ is measured according to ASTM D1238 at 190°C, using a 2.16 kg weight.

### BRIEF DESCRIPTION OF DRAWINGS

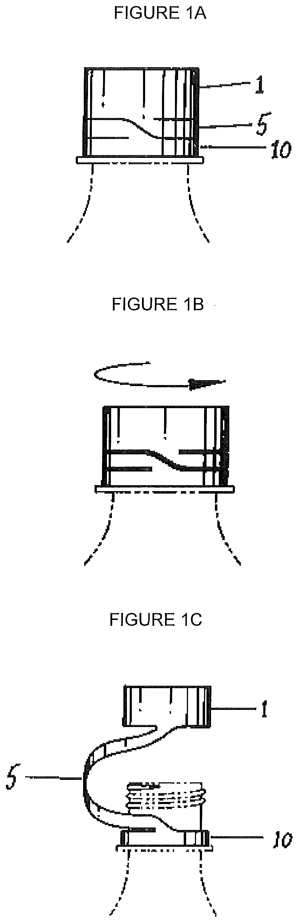

Figure 1A shows an embodiment of a bottle closure assembly fitted to a bottle opening and in a "closed" or "sealed" position. Figure 1B shows an embodiment of a bottle closure assembly as a cap portion is rotated in order to bring about its removal from a bottle opening. Figure 1C shows an embodiment of a bottle closure assembly after a cap portion has been removed from a bottle opening. Figure 1C shows how an elongated tether portion connects at least one point on a cap portion to at least one point on a retaining collar portion once a cap portion has been removed from a bottle opening.

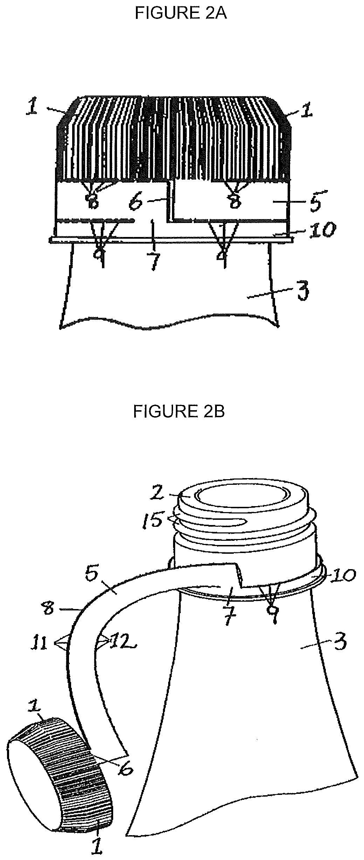

Figure 2A shows an embodiment of a bottle closure assembly fitted over a bottle opening and before a cap portion has been removed from a bottle. Figure 2B shows an embodiment of a bottle closure assembly after a cap portion has been removed from a bottle opening. Figure 2B also shows how an elongated tether portion connects at least one point on a cap portion to at least one point on a retaining collar portion once a cap portion has been removed from a bottle opening, thereby preventing its loss.

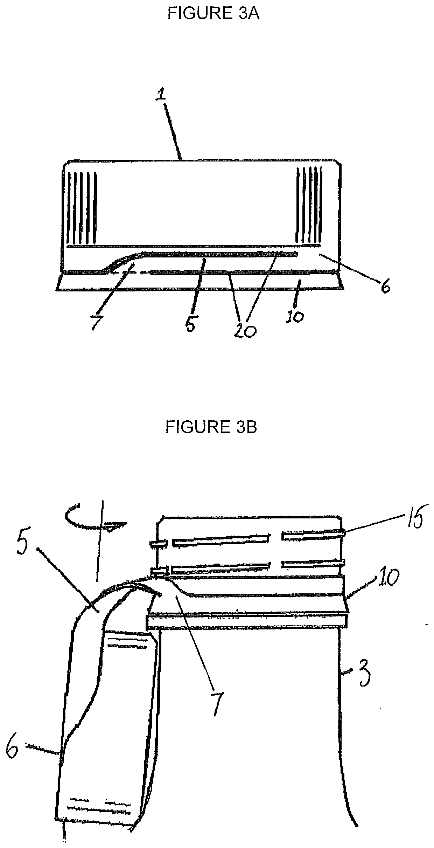

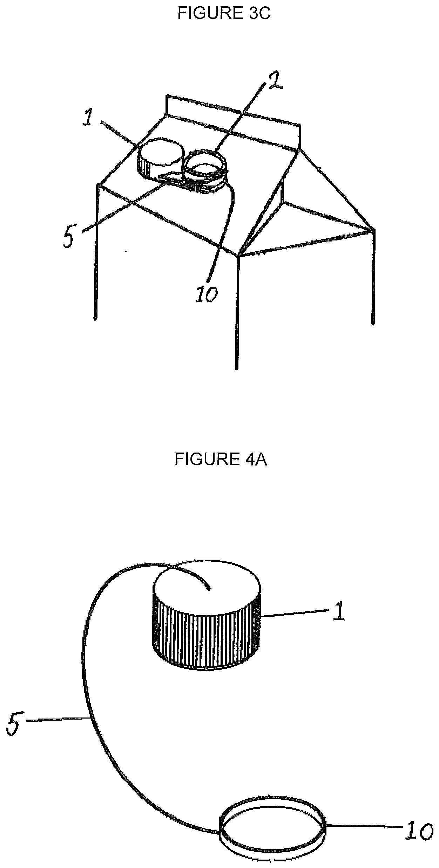

Figure 3A shows an embodiment of a bottle closure assembly. Figure 3B shows an embodiment of a bottle closure assembly after a cap portion has been removed from a bottle opening. Figure 3B also shows how an elongated tether portion connects at least one point on a cap portion to at least one point on a retaining collar portion once a cap portion has been removed from a bottle opening, thereby preventing its loss. Figure 3C shows how an elongated tether portion connects at least one point on a cap portion to at least one point on a retaining collar portion once a cap portion has been removed from a bottle opening. Figure 3C further shows that a bottle can be a carton, a container, or any other suitable containment vessel which has or is fitted with an aperture or opening which can be covered or sealed using a bottle closure assembly.

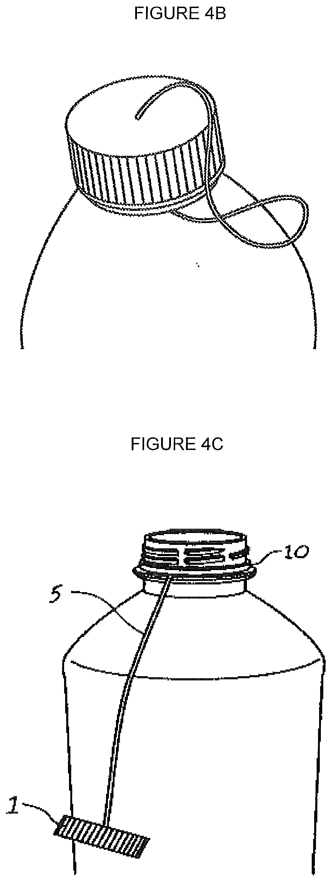

Figure 4A shows an embodiment of a bottle closure assembly in the absence of a bottle. The bottle closure assembly has a cap portion, an elongated tether portion and a retaining collar portion. Figure 4B shows an embodiment of a bottle closure assembly fitted over a bottle opening and before a cap portion has been removed from a bottle opening.
Figure 4C shows an embodiment of a bottle closure assembly after a cap portion has been removed from a bottle opening.

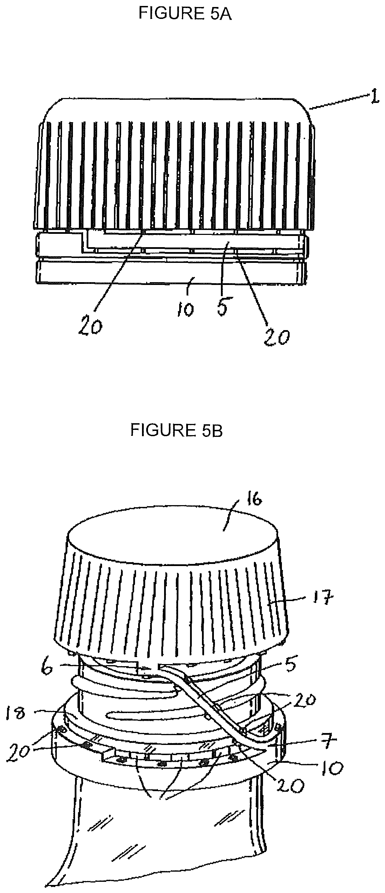

Figure 5A shows a reference embodiment of a bottle closure assembly in the absence of a bottle. Figure 5B shows an embodiment of a bottle closure assembly as a cap portion is rotated in order to bring about its removal from a bottle opening.

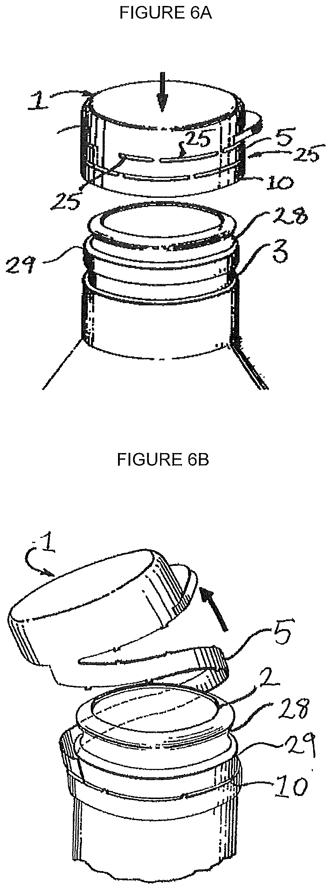

Figure 6A shows an embodiment of a bottle closure assembly which fits over a bottle opening. Figure 6B show an embodiment of a bottle closure assembly after a cap portion has been removed from a bottle opening. Figure 6B shows how an elongated tether portion connects at least one point on a cap portion to at least one point on a retaining collar portion once a cap portion has been removed from a bottle opening.

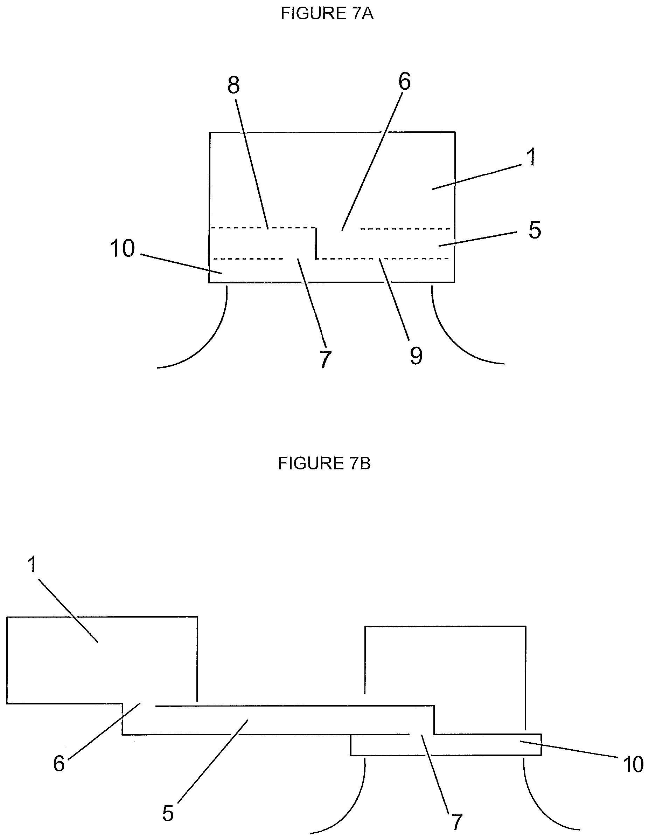

Figure 7A shows an embodiment of a bottle closure assembly fitted to a bottle opening and in a "closed" or "sealed" position. Figure 7B shows an embodiment of a bottle closure assembly after a cap portion has been removed from a bottle opening. Figure 7B shows how an elongated tether portion connects at least one point on a cap portion to at least one point on a retaining collar portion once a cap portion has been removed from a bottle opening.

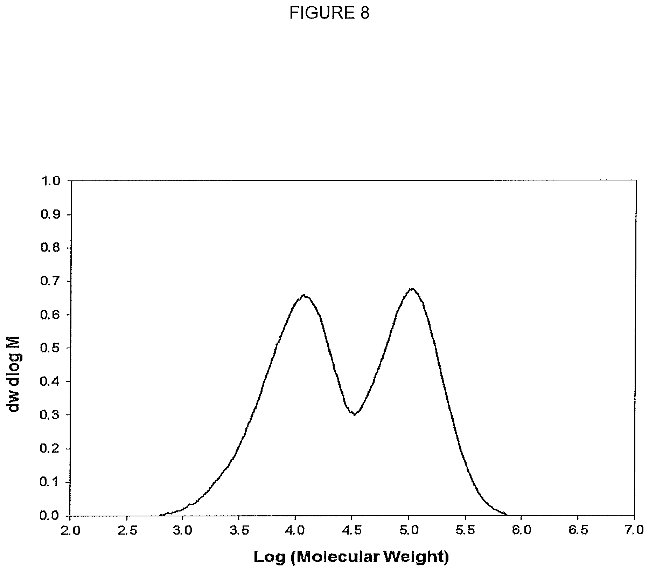

Figure 8 shows a gel permeation chromatograph for a polyethylene homopolymer composition used in an embodiment of the present disclosure.

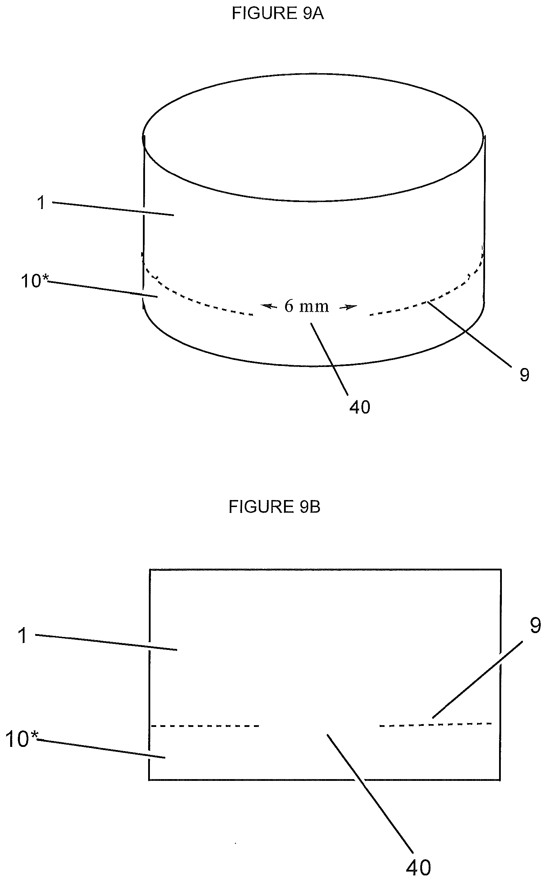

Figure 9A shows a perspective view of a closure having a tether proxy. Figure 9B shows a front elevation view of a closure having a tether proxy. In Figures 9A and 9B a tether proxy connects a cap portion to a tamper evident band.

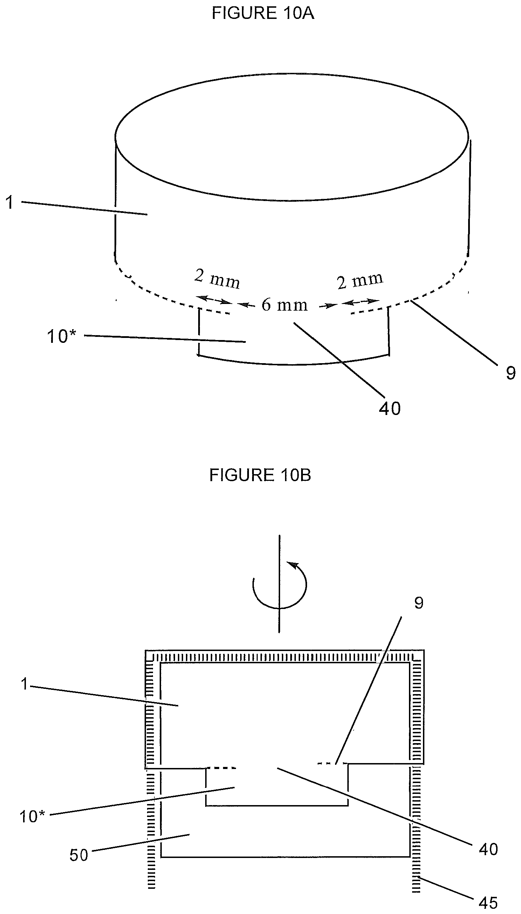

Figure 10A shows a perspective view of a closure having a tether proxy after much of the tamper evident band has been removed. In Figure 10A a tether proxy connects a cap portion to the remaining section of the tamper evident band.
Figure 10B shows a front elevation partial cross-sectional schematic view of a closure having a tether proxy and being mounted on a pre-form for shear deformation testing. Prior to mounting the closure on the pre-form, much of the tamper evident band was removed. The tether proxy connects a cap portion to the remaining section of the tamper evident band. To measure shear deformation of the tether proxy, the remaining section of the tamper evident band is clamped in a stationary position to the pre-form, while the cap portion is rotated within a torque tester, as shown.

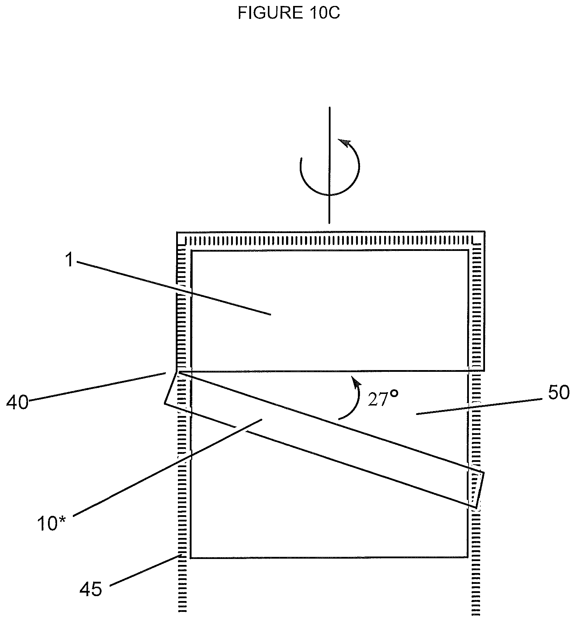

Figure 10C shows a side elevation partial cross-sectional schematic view of a closure having a tether proxy and being mounted on a pre-form for tear deformation testing. The tamper evident band was deflected down and away from the cap portion, while leaving the tether proxy intact. The tether proxy connects the cap portion to the downwardly deflected tamper evident band. To measure tear deformation of the tether proxy, the downwardly deflected tamper evident band is clamped in a stationary position to the pre-form, while the cap portion is rotated within a torque tester, as shown.

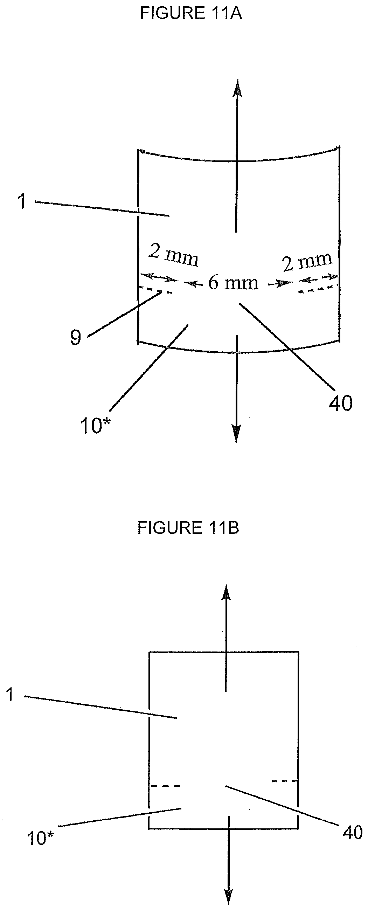

Figures 11A and 11B show a perspective view and a front elevation view respectively, of a tether proxy after much of the cap portion and much of the tamper evident band have been removed. To measure tensile deformation of the tether proxy, the remaining section of the cap portion and the remaining section of the tamper evident band are each clamped and then drawn apart in a vertical direction, within a tensile tester, as shown.

### DESCRIPTION OF EMBODIMENTS

Any suitable bottle closure assembly design comprising a cap portion or a closure portion, an elongated tether portion and a retaining collar portion is contemplated for use in the present disclosure, so long as it is made at least in part using a polyethylene homopolymer composition as described herein. However, some specific non-limiting examples of suitable bottle closure assemblies for use in the present disclosure are disclosed in U.S. Pat. Nos 3,904,062; 4,474,302; 4,557,393; 4,564,114; 4,573,602; 4,583,652; 4,805,792; 5,725,115; 8,443,994; 8,720,716; 9,493,283; and 9,776,779; U.S. Pat. Pub. Nos 2004/0016715 and 2008/0197135; U.S. Design Pat. No. D593,856; and WO 2015/061834. For further reference, some bottle closure assembly designs which may be used in embodiments of the present disclosure are shown in Figures 1-4 and 6-7.

An embodiment of the disclosure is a bottle closure assembly comprising: a cap portion, an elongated tether portion, and a retaining collar portion, the cap portion being molded to reversibly engage and cover a bottle opening, the retaining collar portion being molded to irreversibly engage a bottle neck or an upper portion of a bottle, the elongated tether portion connects at least one point on the cap portion to at least one point on the retaining collar portion, the elongated tether portion comprising a tether strip which is frangibly connected along a portion of its upper edge to a descending annular edge of the cap portion and which is frangibly connected along a portion of its lower edge to an upper annular edge of the retaining collar portion, the tether strip being integrally formed with and connected at one end to at least one point on the cap portion and integrally formed with and connected at another end to at least one point on the retaining collar portion, the frangible sections being breakable when the cap portion is removed from a bottle opening, but where the cap portion remains connected to the retaining collar portion via the tether strip; wherein the cap portion, the elongated tether portion and the retaining collar portion are integrally molded from a polyethylene composition comprising: (I) 95 to 5 weight% of a first ethylene homopolymer having a density of from 0.950 to 0.975 g/cm³; and (II) 5 to 95 weight% of a second ethylene homopolymer having a density of from 0.950 to 0.975 g/cm³, wherein the ratio of the melt index I₂ of the second ethylene homopolymer to the melt index I₂ of the first ethylene homopolymer is at least 10.

When integrally molded the bottle closure assembly presents long flow paths for a plastic material to fill during manufacturing. In the present disclosure, the term "integrally molded" means that that components referred to are molded in a single continuous mold.

In some embodiments, the cap portion is molded to reversibly engage and cover a bottle opening or aperture from which a liquid or other type of foodstuffs can be dispensed and so is removable therefrom.

In some embodiments, the retaining collar portion, , is generally not to be removed, or is not easily removable from a bottle and in other embodiments of the disclosure, the retaining collar engages a bottle neck, or an upper portion of a bottle.

The elongated tether portion connects at least one point of the cap portion to at least one point on the retaining collar portion, so that when the cap portion is removed from a bottle opening, the cap portion remains flexibly fixed to the bottle via the elongated tether portion and the retaining collar portion.

In the present disclosure, the terms "bottle", "container", "jar", "carton", "pouch", and "package" may be used interchangeably in the present disclosure. That is, a "bottle closure assembly" may also be considered a "container closure assembly", a "jar close assembly", a "carton closure assembly", a "pouch closure assembly", and a "package closure assembly". A person skilled in the art will understand that a "bottle closure assembly" as described in the present disclosure can be used to close or seal a number of different types of structural containers having different designs and contours.

The terms "cap", "closure", "closure portion", and "cap portion", are used in the present disclosure to connote any suitably shaped molded article for enclosing, sealing, closing or covering etc., a suitably shaped opening, a suitably molded aperture, or an open necked structure used in combination with a container, a bottle, or ajar.

The retaining collar portion can irreversibly engage a bottle neck, a shoulder section of a bottle, or an upper portion of a bottle, or a fitment (e.g. a fitment on a pouch or a carton).

In an embodiment of the disclosure, the retaining collar portion can also serve as a tamper evident band (TEB).

In the present disclosure, the term "bottle neck" should be construed to mean a bottle neck per se but also any sort of similar or functionally equivalent structure such as a spout, a spigot, or a fitment.

In an embodiment of the disclosure the retaining collar portion is molded or shaped to irreversibly engage a bottle neck, a shoulder section of a bottle, or an upper portion of a bottle.

In an embodiment of the disclosure the retaining collar portion is circularly or annularly shaped so as to irreversibly engage a bottle neck, a shoulder section of a bottle, or an upper portion of a bottle.

The bottle closure assembly comprises a cap portion, an elongated tether portion and a retaining collar portion where the cap portion, the elongated tether portion and the retaining collar portion are all integrally molded in one piece.

The bottle closure assembly comprises a cap portion, an elongated tether portion and a retaining collar portion where the cap portion, the elongated tether portion and the retaining collar portion are made from the same material.

The tether portion is an "elongated tether portion", where "elongated" means that the tether portion will have at least one dimension (length) which is larger than at least one other dimension (width or height/thickness) or vice versa. Or considered another way, "elongated" means that the tether has a length which is greater than its width and/or height/thickness.

In an embodiment of the present disclosure the tether portion will have dimensions (e.g. width and/or height/thickness) which offer sufficient strength to prevent facile cleavage or breakage of the tether when placed under stress or duress, such as for example when the tether is subjected to bending or flexional forces. For example, in an embodiment of the disclosure, the tether will have sufficient width and/or height/thickness so as to prevent facile breakage of the tether when masticated.

In an embodiment of the present disclosure, the "elongated tether portion" is of sufficient length and/or has a design which allows removal of a "cap portion" from a bottle opening while at the same time preventing the loss of the cap portion by maintaining a connection between the cap portion and a bottle, or container by forming a connection between at least one point on the cap portion and at least one point on a "retaining collar portion".

The retaining collar portion is molded to irreversibly engage a bottle neck or an upper portion of a bottle, or container.

In an embodiment of the disclosure, the retaining collar portion is annularly shaped or circularly shaped and can fit over and engage a bottle neck or an upper portion of a bottle, or container.

The cap portion may be a single contiguous piece, or it may itself comprise one or more cap portion structures.

The tether portion in the present disclosure need not serve as a hinged connection between a cap portion and a retaining collar portion, and the tether portion need not comprise a hinged portion or area, but the tether portion may in some embodiments of the disclosure comprise a hinge and when present the hinge may be a so called "living hinge".

In an embodiment of the disclosure the elongated tether portion has a length which is sufficient to allow the cap portion of the bottle closure assembly to swing or hang out of the way of a bottle opening, or aperture so as not to interfere with the dispensation of the bottle contents, while at the same time tethering the cap portion to a bottle via the retaining collar portion.

The cap portion may itself be a screw cap which threadingly engages a threaded system on a bottle neck, spigot, spout, valve, or fitment on a pouch. The cap portion may alternatively be a snap cap which reversibly engages a bottle neck, spigot, or spout. The cap portion may also reversibly engage a retaining collar portion in a snap fitting or in a complementary arrangement of threaded structures. The cap portion may comprise a first cap portion and a second cap portion, where the first cap portion engages the second cap portion in a snap fitting, and the second cap portion engages a bottle neck, or upper portion of a bottle in a reversible or irreversible manner. For example a second cap portion may have a threaded structure which threadingly engages a threaded system on a bottle neck. Alternatively, the second cap portion may itself engage a bottle neck by any suitable type of snap fitting. The cap portion may also comprise more than two cap portions.

In an embodiment of the disclosure, the bottle closure assembly comprises a cap portion adapted to close an opening in a bottle by making a frictional engagement with the opening.

In an embodiment of the disclosure, the cap portion has internal threads which mate with external threads surrounding an opening in a bottle, such as on a bottle neck, spigot, or spout for example.

In an embodiment of the disclosure, the retaining collar portion is adapted to cooperate with a shoulder or a flange on the neck of a bottle or an upper portion of a bottle which is to be sealed by the cap portion.

In an embodiment of the disclosure, the retaining collar portion is annularly or cylindrically shaped and fits onto the neck of a bottle and is coupled to the same, using any suitable coupling means, such as a snap fitting, or a threaded engagement. In an embodiment, the retaining collar portion is molded to snap fit onto a bottle neck, bottle aperture, spigot, or spout. In an embodiment, the retaining collar portion may be threaded onto a bottle neck, bottle aperture, spigot, or spout. In an embodiment the retaining collar portion may itself have an internal threading system which mates with external threads on a bottle neck, bottle aperture, spigot, or spout. In an embodiment, the retaining collar portion is dimensioned to be engaged beneath a flange or shoulder molded into a bottle neck or an upper portion of a bottle. For example, the retaining collar portion may have an annular radial dimension which prevents it from moving past an annular shoulder integrally molded into a bottle neck or into an upper portion of a bottle. In this case the annular outwardly extending shoulder on a bottle neck or on an upper portion of a bottle acts as a camming surface which prevents movement of the retaining collar toward a bottle opening. Such a shoulder on a bottle could for example have a tapered outer annular edge which allows the retaining collar portion to be slipped onto the bottle in an irreversible manner. In an embodiment of the disclosure, there may be outwardly extending annularly spaced bosses on a bottle neck or an upper portion of a bottle, against which the retaining collar abuts to hold it on to a bottle neck, bottle aperture, spigot, or spout. Persons skilled in the art will appreciate that other means could be used to secure the retaining collar portion to a bottle neck, the upper portion of a bottle, a spout, or spigot.

The elongated tether portion comprises a connecting strip having a first end connected to a least one point of the cap portion and a second end connected to at least one point of the retaining collar portion, a lower edge and an upper edge, wherein when the cap portion is fitted on to a bottle opening, the connecting strip at least partially encircles a bottle neck, or spout, between the cap portion and the retaining collar portion, and where at least a portion of the upper edge of the connecting strip is frangibly connected to a lower edge of the cap portion, and where at least a portion of the lower edge of the connecting strip is frangibly connected to an upper edge of the retaining collar portion, and where when the cap portion is removed from a bottle opening by breaking the frangible connections between the cap portion, the connecting strip and the retaining collar portion, the cap portion remains secured to retaining collar portion and the bottle via the connecting strip.

In an embodiment the elongated tether portion is a cylindrically adapted connecting strip which at least partially encircles a bottle neck, or spout, and is located between the cap portion and the retaining collar portion prior to removal of the cap portion form a bottle opening.

The elongated tether portion has a first end which is connected to at least one point on the cap portion and a second end which is connected to at least one point on the retaining collar portion.

The cap portion, the elongated tether portion and the retaining collar portion are integrally molded so that the elongated tether portion has a first end which is connected to at least one point on the cap portion and a second end which is connected to at least one point on the retaining collar portion, and wherein the elongated tether portion has an upper edge and a lower edge, where at least a portion of the upper edge is frangibly connected to a lower edge of the cap portion, and at least a portion of the lower edge is frangibly connected to an upper edge of the retaining collar portion, the frangibly connected portions being breakable when the closure is removed from a bottle opening.

In an embodiment of the disclosure, the frangible connections or frangibly connected portions are regularly or irregularly spaced molded sections (e.g. pins) having a dimension suitably small to allow facile breakage.

Frangible connections or frangibly connected portions can also be thought of as defining a weakening line along which the elongated tethering portion can be separated from the cap portion and the retaining collar portion. Such weakening lines can be generally defined as open sections alternating with bridging sections, where the bridging sections have a dimension suitably small to allow facile breakage. Alternatively, the weakening lines are defined by lines of plastic which have been made thin enough to break under stress.

In an embodiment of the disclosure, a single piece of a molded plastic having a suitable shape, is purposely weakened (by for example, regular or irregularly spaced cuts) along predetermined lines to define a cap portion, an elongated tether portion and a retaining collar portion, wherein the cap portion is shaped to reversibly engage and cover a bottle opening, the retaining collar portion is shaped to irreversibly engage a bottle neck or an upper portion of a bottle, and where the elongated tether portion connects at least one point on the cap portion to at least one point on the retaining collar portion.

In an embodiment of the disclosure, the bottle closure assembly comprises an upper cap portion, an intermediate elongate tethering portion, and a lower retaining collar portion, where the intermediate elongate tethering portion has a first end permanently connected to at least one point of the upper cap portion and a second end permanently connected to at least one point on the lower retaining collar portion, wherein the intermediate elongate tethering portion is partially joined to a lower annular edge of the upper cap portion along a first peripheral weakening line and the intermediate elongate tethering portion is partially joined to an upper annular edge of the lower retaining collar portion along a second peripheral weakening line, wherein removal of the upper cap portion from a bottle separates the upper cap portion from the intermediate elongate tethering portion along the first peripheral weakening line and separates the lower retaining collar portion from the intermediate elongate tethering portion along the second weakening line, while maintaining a linkage between the upper cap portion and the lower retaining collar portion through the intermediate elongate tethering portion.

In an embodiment of the disclosure, and with reference to Figures 1A-1C, the bottle closure assembly comprises: an upper cap portion, 1 dimensioned to reversibly cover and close a bottle opening, a lower retaining collar portion, 10 dimensioned to irreversibly engage a bottle neck, or an upper portion of a bottle, and an elongated tether portion, 5 being dimensioned as a strip which at least partially encircles a bottle neck between the upper cap portion and the lower retaining collar portion, the strip comprising a first end, a second end, an upper edge and a lower edge, the upper edge of which is in part contiguous with the upper cap portion, the lower edge of which is in part contiguous with the lower retaining collar portion, whereby removal of the upper cap portion from a bottle (by for example rotation about a threaded system on the bottle neck) separates the elongated tether portion from the upper cap portion and the lower retaining collar portion, while at the same leaving the upper cap portion attached to the lower retaining collar via the elongated tether portion.

In an embodiment of the disclosure, and with reference to Figures 2A and 2B, the bottle closure assembly comprises: an upper cap portion, 1 dimensioned to reversibly cover and close a bottle opening, 2 a lower retaining collar portion, 10 dimensioned to irreversibly engage a bottle neck, 3 or an upper portion of a bottle, and an elongated tether portion, 5 being dimensioned as a strip which at least partially encircles a bottle neck between the upper cap portion and the lower retaining collar portion, the strip comprising a first end, 6 a second end, 7 an upper edge, 11 and a lower edge, 12, the upper edge of which is in part frangibly attached, 8 to the upper cap portion, and in part contiguous with the upper cap portion, the lower edge of which is in part frangibly attached, 9 to the lower retaining collar portion and in part contiguous with the lower retaining collar portion, whereby removal of the upper cap portion from a bottle will rupture the frangible attachments while leaving the upper cap portion attached to the lower retaining collar portion via the elongated tether portion. In an embodiment and with reference to Figure 2B, the bottle opening may have peripheral threads, 15 which engage threads on the inside of the cap portion.

In an embodiment of the disclosure, and with reference to Figures 3A-3C, the bottle closure assembly comprises: an upper cap portion, 1 dimensioned to reversibly cover and close a bottle opening, a lower retaining collar portion, 10 dimensioned to irreversibly engage a bottle neck, 3 or an upper portion of a bottle, and an elongated tether portion, 5 being dimensioned as a strip which at least partially encircles a bottle neck between the upper cap portion and the lower retaining collar portion, the strip having a first end, 6 a second end, 7 an upper edge, and a lower edge, the upper edge of which is in part frangibly attached to the upper cap portion by frangible elements, 20 (such as for example breakable pins), and in part contiguous with the upper cap portion, the lower edge of which is in part frangibly attached to the lower retaining collar portion by frangible elements, 20 (such as for example breakable pins) and in part contiguous with the lower retaining collar portion, whereby removal of the upper cap portion from a bottle opening will rupture the frangible attachments while leaving the upper cap portion attached to the lower retaining collar portion via the elongated tether portion, 5. In an embodiment and with reference to Figure 3B, the bottle neck and opening may have peripheral threads, 15 which engage threads on the inside of the cap portion.

In an embodiment of the disclosure, and with reference to Figures 4A-4C, the bottle closure assembly comprises a cap portion, 1, an elongated tether portion, 5, and a retaining collar portion, 10.

In a reference embodiment of the disclosure, and with reference to Figures 5A and 5B, the bottle closure assembly comprises: a cap portion, 1 a tether portion, 5 and a retaining means portion, 10 the cap portion being molded to reversibly engage and cover a bottle opening, the retaining means portion being molded to irreversibly engage a bottle neck or an upper portion of a bottle, 18 and the tether portion being molded to connect at least one point on the cap portion to at least one point on the retaining means portion, the cap portion and the retaining collar portion extending coaxially with each other, the tether portion comprising a tabbed tether strip which is integrally formed with and secured at its respective ends (6 and 7) to the cap portion and the retaining collar portion, the tether strip being joined to the cap portion and the retaining collar along a preselected length of the tether strip to be manually separated from the cap portion and the retaining collar portion by frangible elements, 20 of a preselected thickness to permit the elongated tether strip to be manually separated from the cap portion and the retaining collar portion along the pre-selected length, the tether strip being of such length so as to permit the cap portion to be removed from a bottle opening while at the same remaining attached to the bottle via the tether strip and the retaining collar. In an embodiment and as shown in Figure 5B, a cap portion may have a circular top wall, 16 and a descending annular side wall 17.

In an embodiment of the disclosure the bottle closure assembly comprises: a cap portion having a top wall and a side wall, an elongated tether portion, and a retaining collar portion, the cap portion being molded to reversibly engage and cover a bottle opening, the retaining collar portion being annular and being molded to irreversibly engage a ridge or flange on a bottle neck or on an upper portion of a bottle, and the elongated tether portion being integrally molded with the cap portion and the retaining collar portion to connect at least one point on the cap side wall to at least one point on the retaining collar portion, wherein the elongated tether portion runs between the cap side wall and the retaining collar portion along the circumference of the cap portion when the cap portion is on a bottle and the elongated tether portion connects at least one point on the cap side wall to at least one point on the retaining collar portion when the cap portion is removed from a bottle.

In an embodiment of the disclosure, and with reference to Figures 6A and 6B, the bottle closure assembly comprises an upper cap portion, 1 an intermediate elongate tethering portion, 5 and a lower retaining collar portion, 10 where the intermediate elongate tethering portion has a first end permanently connected to at least one point of the upper cap portion and a second end permanently connected to at least one point on the lower retaining collar portion, wherein the intermediate elongate tethering portion is partially joined to a lower annular edge of the upper cap portion along a first peripheral weakening line defined by perforations, 25 and the intermediate elongate tethering portion is partially joined to an upper annular edge of said lower retaining collar portion along a second peripheral weakening line defined by perforations, 25 wherein removal of the upper cap portion from a bottle separates the upper cap portion from the tethering portion along the first peripheral weakening line and separates the lower retaining collar portion from the tethering portion along the second weakening line, while maintaining a linkage between the upper cap portion and the lower retaining collar portion through the intermediate elongated tethering portion.

In an embodiment of the disclosure and with reference to Figures 6A and 6B, a bottle neck 3, may have an annular groove 28, which presents a flange onto which the cap portion, 1 may reversibly engage in a snap fit arrangement. In an embodiment and with reference to Figures 6A and 6B a bottle neck may have an outwardly extended annular flange, 29 which prevents a retaining collar portion, 10 from being removed from a bottle neck.

In an embodiment of the disclosure, and with reference to Figures 7A and 7B, the bottle closure assembly comprises a cap portion, 1, an elongated tether portion, 5, and a retaining collar portion, 10. The elongated tether portion connects at least one point of the cap portion at a first end, 6 to at least one point of the retaining collar portion at a second end, 7. The elongated tether portion may be further joined to the cap portion along a frangible connection 8. The elongated tether portion may be further joined to the retaining collar portion along a frangible connection 9. Separation of the cap portion from the elongated tether portion along a frangible connection 8 along with separation of the retaining collar portion from the elongated tether portion along a frangible connection 9, allows removal of the cap portion from a bottle opening while at the same time securing it to the bottle via the elongated tether portion and the retaining collar portion.

In an embodiment of the disclosure, the bottle closure assembly comprises: a cap portion, the cap portion being dimensioned to cover and close a bottle opening, a retaining collar portion, and an elongated tether portion which forms an elastic connection between at least one point on the cap portion and at least one point on the retaining collar portion.

In an embodiment of the disclosure, the retaining collar portion is integrally molded into a bottle, or container.

In an embodiment of the disclosure, the elongated tether portion fixes the cap portion to the retaining collar portion which remains secured to the bottle, making it difficult to separate the cap portion from the bottle, thereby preventing its loss, while at the same time allowing rotation of the cap portion for facile removal and replacement of the same from and onto a bottle opening.

In the present disclosure, the bottle closure assembly is made in part or in full using a polyethylene homopolymer composition comprising: (I) 95 to 5 weight% of a first ethylene homopolymer having a density of from 0.950 to 0.975 g/cm³; and (II) 5 to 95 weight% of a second ethylene homopolymer having a density of from 0.950 to 0.975 g/cm³, wherein the ratio of the melt index I₂ of the second ethylene homopolymer to the melt index I₂ of the first ethylene homopolymer is at least 10.

In the present disclosure, the cap portion, the elongated tether portion, and the retaining collar portion are all integrally molded from a polyethylene homopolymer composition comprising: (I) 95 to 5 weight% of a first ethylene homopolymer having a density of from 0.950 to 0.975 g/cm³; and (II) 5 to 95 weight% of a second ethylene homopolymer having a density of from 0.950 to 0.975 g/cm³, wherein the ratio of the melt index I₂ of the second ethylene homopolymer to the melt index I₂ of the first ethylene homopolymer is at least 10.

Further polyethylene homopolymer compositions suitable for use in the manufacture of part or all of the bottle closure assembly discussed above are disclosed in for example U.S. Pat. Nos US7,737,220; US 9,587,093; US 9,644,087 and US Pat. Appl. Pub. No. US2015/0203671; US20170130040; and US2008/0118749.

Suitable polyethylene homopolymer compositions for use in the manufacture of part or all of the bottle closure assembly are described in more detail below.

By the term "ethylene homopolymer" or "polyethylene homopolymer", it is meant that the product polymer is the product of a polymerization process, where only ethylene was deliberately added as a polymerizable olefin.

By the term "ethylene copolymer" or "polyethylene copolymer", it is meant that the product polymer is the product of a polymerization process, where ethylene and one or more than one comonomer were deliberately added or was deliberately present as polymerizable olefins.

The term "unimodal" is herein defined to mean there will be only one significant peak or maximum evident in a GPC-curve. A unimodal profile includes a broad unimodal profile. Alternatively, the term "unimodal" connotes the presence of a single maxima in a molecular weight distribution curve generated according to the method of ASTM D6474-99. In contrast, by the term "bimodal" it is meant that there will be a secondary peak or shoulder evident in a GPC-curve which represents a higher or lower molecular weight component (i.e. the molecular weight distribution, can be said to have two maxima in a molecular weight distribution curve). Alternatively, the term "bimodal" connotes the presence of two maxima in a molecular weight distribution curve generated according to the method of ASTM D6474-99. The term "multi-modal" denotes the presence of two or more maxima in a molecular weight distribution curve generated according to the method of ASTM D6474-99.

In an embodiment of the disclosure, the polyethylene homopolymer composition comprises at least a first ethylene homopolymer and at least a second ethylene homopolymer which is different from the first ethylene homopolymer.

### I) The First Ethylene Homopolymer

In the present disclosure, the first ethylene homopolymer comprises negligible amounts of comonomer.

In the present disclosure, the first ethylene homopolymer has a melt index, I₂ which is at least 10 times lower than the melt index, I₂ of the second ethylene homopolymer.

In an embodiment of the disclosure, the first ethylene homopolymer has a weight average molecular weight, Mw that is higher than the weight average molecular weight, Mw of the second ethylene homopolymer.

As will be recognized by those skilled in the art, melt index, I₂, is in general inversely proportional to molecular weight. Thus, in an embodiment of the disclosure, the first ethylene homopolymer has a comparatively low melt index, I₂ (or, alternatively stated, a comparatively high molecular weight) in comparison to the second ethylene homopolymer.

In an embodiment of the disclosure, the first ethylene homopolymer has a density of from 0.950 to 0.975 g/cm³. In another embodiment of the disclosure, the first ethylene homopolymer has a density of from 0.955 to 0.970 g/cm³. In another embodiment of the disclosure, the first ethylene homopolymer has a density of from 0.955 to 0.965 g/cm³.

In an embodiment of the disclosure, the first ethylene homopolymer has a melt index, I₂ of less than about 1.0 grams/10 minutes (g/10min).

In an embodiment of the disclosure, the first ethylene homopolymer has a melt index, I₂ of from about 0.01 to about 1.0 grams/10 minutes (g/10min).

In an embodiment of the disclosure, the first ethylene homopolymer has a melt index, I₂ of from about 0.1 to about 2.0 grams/10 minutes (g/10min).

In an embodiment of the disclosure, the first ethylene homopolymer has a melt index, I₂ of from about 0.8 to about 2.0 grams/10 minutes (g/10min).

In an embodiment of the disclosure, the molecular weight distribution (Mw/Mn) of the first ethylene homopolymer is from about 1.7 to about 20.0. In further embodiments of the disclosure, the molecular weight distribution (Mw/Mn) of the first ethylene homopolymer is from about 2.0 to about 20.0, or from about 1.7 to about 4.0, or from about 2.0 to about 4.0.

In an embodiment of the disclosure, the first ethylene homopolymer may itself comprise one or more high density ethylene homopolymer subcomponents.

In an embodiment of the disclosure, the first ethylene homopolymer comprises from 95 to 5 weight percent (wt%) of the total weight of the first and second ethylene homopolymers. In an embodiment of the disclosure, the first ethylene homopolymer comprises from 95 to 20 weight percent (wt%) of the total weight of the first and second ethylene homopolymers. In an embodiment of the disclosure, the first ethylene homopolymer comprises from 95 to 30 weight percent (wt%) of the total weight of the first and second ethylene homopolymers. In an embodiment of the disclosure, the first ethylene homopolymer comprises from 95 to 40 weight percent (wt%) of the total weight of the first and second ethylene homopolymers. In an embodiment of the disclosure, the first ethylene homopolymer comprises from 90 to 30 weight percent (wt%) of the total weight of the first and second ethylene homopolymers. In an embodiment of the disclosure, the first ethylene homopolymer comprises from 85 to 30 weight percent (wt%) of the total weight of the first and second ethylene homopolymers. In an embodiment of the disclosure, the first ethylene homopolymer comprises from 80 to 30 weight percent (wt%) of the total weight of the first and second ethylene homopolymers. In an embodiment of the disclosure, the first ethylene homopolymer comprises from 75 to 30 weight percent (wt%) of the total weight of the first and second ethylene homopolymers. In an embodiment of the disclosure, the first ethylene homopolymer comprises from 70 to 30 weight percent (wt%) of the total weight of the first and second ethylene homopolymers. In an embodiment of the disclosure, the first ethylene homopolymer comprises from 65 to 35 weight percent (wt%) of the total weight of the first and second ethylene homopolymers. In an embodiment of the disclosure, the first ethylene homopolymer comprises from 60 to 40 weight percent (wt%) of the total weight of the first and second ethylene homopolymers.

### II) The Second Ethylene Homopolymer

In the present disclosure, the second ethylene homopolymer comprises negligible amounts of comonomer.

In the present disclosure the second ethylene homopolymer has a melt index, I₂ which is at least 10 times larger than the melt index, I₂ of the first ethylene homopolymer.

In an embodiment of the disclosure, the second ethylene homopolymer has a weight average molecular weight, Mw that is lower than the weight average molecular weight, Mw of the first ethylene homopolymer.

As will be recognized by those skilled in the art, melt index, I₂, is in general inversely proportional to molecular weight. Thus, in an embodiment of the disclosure, the second ethylene homopolymer has a comparatively high melt index, I₂ (or, alternatively stated, a comparatively low molecular weight) in comparison to the first ethylene homopolymer.

In an embodiment of the disclosure, the second ethylene homopolymer has a density of from 0.950 to 0.975 g/cm³. In another embodiment of the disclosure, the second ethylene homopolymer has a density of from 0.955 to 0.970 g/cm³. In another embodiment of the disclosure, the second ethylene homopolymer has a density of from 0.955 to 0.965 g/cm³.

In an embodiment of the disclosure, the second ethylene homopolymer has a melt index, I₂ of greater than about 5.0 g/10min. In further embodiments, the second ethylene homopolymer may have a melt index of from greater than about 5.0 to about 50 g/10min, or from greater than 5.0 to about 40.0 g/10min, or from greater than 5.0 to about 30 g/10min, or from greater than 5.0 to about 20.0 g/10min.

In an embodiment of the disclosure, the second ethylene homopolymer has a melt index, I₂ of from 15.0 to 30.0 g/10min.

In an embodiment of the disclosure, the second ethylene homopolymer has a melt index, I₂ of greater than about 100 g/10min, or greater than about 500 g/10min, or greater than about 1000 g/10min, or greater than about 5000 g/10min.

In an embodiment of the disclosure, the molecular weight distribution (Mw/Mn) of the second ethylene homopolymer is from about 1.7 to about 20.0. In further embodiments of the disclosure, the molecular weight distribution (Mw/Mn) of the second ethylene homopolymer is from about 2.0 to about 20.0, or from about 1.7 to about 4.0, or from about 2.0 to about 4.0.

In an embodiment of the disclosure, the second ethylene homopolymer may itself comprise one or more high density ethylene homopolymer subcomponents.

In an embodiment of the disclosure, the second ethylene homopolymer comprises from 5 to 95 weight percent (wt%) of the total weight of the first and second ethylene homopolymers. In an embodiment of the disclosure, the second ethylene homopolymer comprises from 5 to 80 weight percent (wt%) of the total weight of the first and second ethylene homopolymers. In an embodiment of the disclosure, the second ethylene homopolymer comprises from 5 to 70 weight percent (wt%) of the total weight of the first and second ethylene homopolymers. In an embodiment of the disclosure, the second ethylene homopolymer comprises from 5 to 60 weight percent (wt%) of the total weight of the first and second ethylene homopolymers. In an embodiment of the disclosure, the second ethylene homopolymer comprises from 10 to 70 weight percent (wt%) of the total weight of the first and second ethylene homopolymers. In an embodiment of the disclosure, the second ethylene homopolymer comprises from 15 to 70 weight percent (wt%) of the total weight of the first and second ethylene homopolymers. In an embodiment of the disclosure, the second ethylene homopolymer comprises from 20 to 70 weight percent (wt%) of the total weight of the first and second ethylene homopolymers. In an embodiment of the disclosure, the second ethylene homopolymer comprises from 25 to 70 weight percent (wt%) of the total weight of the first and second ethylene homopolymers. In an embodiment of the disclosure, the first ethylene homopolymer comprises from 30 to 70 weight percent (wt%) of the total weight of the first and second ethylene homopolymers. In an embodiment of the disclosure, the second ethylene homopolymer comprises from 35 to 65 weight percent (wt%) of the total weight of the first and second ethylene homopolymers. In an embodiment of the disclosure, the second ethylene homopolymer comprises from 40 to 60 weight percent (wt%) of the total weight of the first and second ethylene homopolymers.

### The Polyethylene Homopolymer Composition

In an embodiment of the disclosure, the polyethylene homopolymer composition minimally comprises a I) first ethylene homopolymer; and II) a second ethylene homopolymer.

In an embodiment of the disclosure, the ratio of the melt index, I₂ of the second ethylene homopolymer to the melt index, I₂ of the first ethylene homopolymer, (i.e. the I₂ of the second ethylene homopolymer divided by the I₂ of the first ethylene homopolymer) is at least 10 (i.e. the ratio is at least 10/1).

In an embodiment of the disclosure, the polyethylene homopolymer composition has a bimodal profile in a gel permeation chromatograph.

In an embodiment of the disclosure, the polyethylene homopolymer composition has a multimodal profile in a gel permeation chromatograph.

In an embodiment of the disclosure, the polyethylene homopolymer composition comprises one or more than one nucleating agent.

In an embodiment of the disclosure, the polyethylene homopolymer composition has a density of a least 0.950 grams per cubic centimeter, g/cm³. In another embodiment of the disclosure, the polyethylene homopolymer composition has a density of a least 0.955 grams per cubic centimeter, g/cm³.

In embodiments of the invention, the polyethylene homopolymer composition has a density of from 0.950 to 0.975 g/cm³, or from 0.952 to 0.973 g/cm³, or from 0.955 to 0.970 g/cm³, or from 0.955 to 0.967 g/cm³, or from 0.955 to 0.965 g/cm³.

In an embodiment of the disclosure, the polyethylene homopolymer composition has a melt index, I₂ of from 0.5 to 10 g/10min. In another embodiment of the disclosure, the polyethylene homopolymer composition has a melt index, I₂ of from 0.8 to 8 g/10min.

In an embodiment of the disclosure, the polyethylene homopolymer composition has a molecular weight distribution (Mw/Mn) of from about 3.0 to about 20.0.

The polyethylene homopolymer composition may be made by any blending process, such as: 1) physical blending of particulate resins; 2) co-feed of different resins to a common extruder; 3) melt mixing (in any conventional polymer mixing apparatus); 4) solution blending; or 5) a polymerization process which employs 2 or more reactors.

In an embodiment of the disclosure, the polyethylene homopolymer composition is prepared by a solution polymerization process using two reactors that operate under different polymerization conditions. This provides a uniform, insitu blend of the first and second ethylene homopolymer components. An example of this process is described in published U.S. Pat. Appl. Pub. No. 2006/0047078.

In an embodiment of the disclosure, the polyethylene homopolymer composition is prepared by melt blending a first and second ethylene homopolymer in an extruder.

In an embodiment of the disclosure, the polyethylene homopolymer composition is prepared by melt blending the following two blend components in an extruder:
from 90 to 70 weight % of I) a first ethylene homopolymer which is a conventional high density polyethylene (HDPE) having a melt index, I₂, of from about 0.8 to about 2.0 grams/10 minutes and a density of from 0.955 to 0.965 g/cm³, with from 10 to 30 weight % of II) a second ethylene homopolymer which is a conventional high density polyethylene (HDPE) having a melt index, I₂, of from about 15 to about 30 grams/10 minutes and a density of from 0.950 to 0.960 g/cm³.

Examples of commercially available HDPE resins which are suitable for use as the first ethylene homopolymer include (with typical melt index and density values shown in brackets): SCLAIR^{®} 19G, available from NOVA Chemicals (I₂= 1.2 g/10min, density=0.962 g/cm³); MARFLEX^{®} 9659, available from Chevron Phillips (I₂ = 1 g/10min, density=0.962 g/cm³); and ALATHON^{®} L 5885, available from Equistar (I₂ = 0.9 g/10min, density=0.958 g/cm³).

An example of a commercially available HDPE resin which is suitable for use as the second ethylene homopolymer is sold under the trademark SCLAIR 79F, which is an HDPE resin that is prepared by the homopolymerization of ethylene with a conventional Ziegler-Natta catalyst. It has a typical melt index, I₂ of 18 g/10min, a typical density of 0.963 g/cm³ and a typical molecular weight distribution of about 2.7.

In an embodiment of the disclosure, the polyethylene homopolymer composition is prepared by a solution polymerization process using two reactors that operate under different polymerization conditions. This provides a uniform, in situ blend of the first and second ethylene homopolymer components. Such a blend can, for example, be made according to US Pat. Appl. Pub. No. US2013/0225743, US2015/0203671, US2017/0002186, US20170130040, or US2008/0118749.

### Nucleating Agents

The term "nucleating agent", as used herein, is meant to convey its conventional meaning to those skilled in the art of preparing nucleated polyolefin compositions, namely an additive that changes the crystallization behavior of a polymer as the polymer melt is cooled.

A review of nucleating agents is provided in U.S. Pat. Nos. 5,981,636, 6,465,551 and 6,599,971.

Nucleating agents which are commercially available and which may be added to the polyethylene homopolymer composition are dibenzylidene sorbital esters (such as the products sold under the trademark MILLAD^{®} 3988 by Milliken Chemical and IRGACLEAR^{®} by Ciba Specialty Chemicals). Further examples of nucleating agents which may be added to the polyethylene homopolymer composition include the cyclic organic structures disclosed in U.S. Pat. No. 5,981,636 (and salts thereof, such as disodium bicyclo [2.2.1] heptene dicarboxylate); the saturated versions of the structures disclosed in U.S. Pat. No. 5,981,636 (as disclosed in U.S. Pat. No. 6,465,551; Zhao et al., to Milliken); the salts of certain cyclic dicarboxylic acids having a hexahydrophthalic acid structure (or "HHPA" structure) as disclosed in U.S. Pat. No. 6,599,971 (Dotson et al., to Milliken); and phosphate esters, such as those disclosed in U.S. Pat. No. 5,342,868 and those sold under the trade names NA-11 and NA-21 by Asahi Denka Kogyo, cyclic dicarboxylates and the salts thereof, such as the divalent metal or metalloid salts, (particularly, calcium salts) of the HHPA structures disclosed in U.S. Pat. No. 6,599,971. For clarity, the HHPA structure generally comprises a ring structure with six carbon atoms in the ring and two carboxylic acid groups which are substituents on adjacent atoms of the ring structure. The other four carbon atoms in the ring may be substituted, as disclosed in U.S. Pat. No. 6,599,971. An example is 1,2-cyclohexanedicarboxylicacid, calcium salt (CAS registry number 491589-22-1). Still further examples of nucleating agents which may be added to the polyethylene homopolymer composition include those disclosed in WO2015042561, WO2015042563, WO2015042562 and WO2011050042.

Many of the above described nucleating agents may be difficult to mix with the polyethylene homopolymer composition that is being nucleated and it is known to use dispersion aids, such as for example, zinc stearate, to mitigate this problem.

In an embodiment of the disclosure, the nucleating agents are well dispersed in the polyethylene homopolymer composition.

In an embodiment of the disclosure, the amount of nucleating agent used is comparatively small--from 100 to 3000 parts by million per weight (based on the weight of the polyethylene composition) so it will be appreciated by those skilled in the art that some care must be taken to ensure that the nucleating agent is well dispersed. In an embodiment of the disclosure, the nucleating agent is added in finely divided form (less than 50 microns, especially less than 10 microns) to the polyethylene homopolymer composition to facilitate mixing. This type of "physical blend" (i.e. a mixture of the nucleating agent and the resin in solid form) is generally preferable to the use of a "masterbatch" of the nucleator (where the term "masterbatch" refers to the practice of first melt mixing the additive--the nucleator, in this case--with a small amount of the polyethylene homopolymer compositionthen melt mixing the "masterbatch" with the remaining bulk of the polyethylene homopolymer composition).

In an embodiment of the disclosure, an additive such as nucleating agent may be added to the polyethylene homopolymer composition by way of a "masterbatch", where the term "masterbatch" refers to the practice of first melt mixing the additive (e.g. a nucleator) with a small amount of the polyethylene homopolymer composition, followed by melt mixing the "masterbatch" with the remaining bulk of the polyethylene homopolymer composition.

In an embodiment of the disclosure, the polyethylene homopolymer composition comprises a nucleating agent or a mixture of nucleating agents.

### Other Additives

The polyethylene homopolymer composition may also contain other conventional additives, especially (1) primary antioxidants (such as hindered phenols, including vitamin E); (2) secondary antioxidants (especially phosphites and phosphonites); and (3) process aids (especially fluoroelastomer and/or polyethylene glycol bound process aid).

Still other additives that may be added to the polyethylene homopolymer include nitrones, antacids, UV absorbers, metal deactivators, pigments, dyes, fillers and reinforcing agents, nano-scale organic or inorganic materials, antistatic agents, lubricating agents such as calcium stearates, and slip additives such as erucimide and behenamide.

The polyethylene homopolymer compositions described above are used in the formation of bottle closure assemblies. For example, bottle closure assemblies formed in part on in whole by compression molding and injection molding are contemplated.

In one embodiment, the bottle closure assembly comprises the polyethylene homopolymer composition described above which has good barrier properties. The bottle closure assemblies are well suited for sealing bottles, and containers, for examples bottles that may contain drinkable water, and other foodstuffs, including but not limited to liquids that are pressurized (e.g. carbonated beverages or appropriately pressurized drinkable liquids). The bottle closure assemblies may also be used for sealing bottles containing drinkable water or non-carbonated beverages (e.g. juice). Other applications, include bottle closure assemblies for bottles and containers containing foodstuffs, such as for example ketchup bottles.

The bottle closure assemblies of the current disclosure can be made according to any known method, including for example injection molding and compression molding techniques that are well known to persons skilled in the art. Hence, in an embodiment of the disclosure a bottle closure assembly comprising the polyethylene homopolymer composition (defined above) is prepared with a process comprising at least one compression molding step and/or at least one injection molding step.

Further non-limiting details of the disclosure are provided in the following examples. The examples are presented for the purpose of illustrating selected embodiments of this disclosure, it being understood that the examples presented do not limit the claims presented.

### EXAMPLES

Mₙ, M_{w}, and M_{z} (g/mol) were determined by high temperature Gel Permeation Chromatography (GPC) with differential refractive index (DRI) detection using universal calibration (e.g., ASTM -D6474-99). GPC data was obtained using an instrument sold under the trade name "Waters 150c", with 1,2,4-trichlorobenzene as the mobile phase at 140°C. The samples were prepared by dissolving the polymer in this solvent and were run without filtration. Molecular weights are expressed as polyethylene equivalents with a relative standard deviation of 2.9% for the number average molecular weight ("Mn") and 5.0% for the weight average molecular weight ("Mw"). The molecular weight distribution (MWD) is the weight average molecular weight divided by the number average molecular weight, M_{W}/Mₙ. The z-average molecular weight distribution is M_{z}/Mₙ. Polymer sample solutions (1 to 2 mg/mL) were prepared by heating the polymer in 1,2,4-trichlorobenzene (TCB) and rotating on a wheel for 4 hours at 150°C in an oven. The antioxidant 2,6-di-tert-butyl-4-methylphenol (BHT) was added to the mixture in order to stabilize the polymer against oxidative degradation. The BHT concentration was 250 ppm. Sample solutions were chromatographed at 140°C on a PL 220 high-temperature chromatography unit equipped with four Shodex columns (HT803, HT804, HT805 and HT806) using TCB as the mobile phase with a flow rate of 1.0 mL/minute, with a differential refractive index (DRI) as the concentration detector. BHT was added to the mobile phase at a concentration of 250 ppm to protect the columns from oxidative degradation. The sample injection volume was 200 mL. The raw data were processed with Cirrus GPC software. The columns were calibrated with narrow distribution polystyrene standards. The polystyrene molecular weights were converted to polyethylene molecular weights using the Mark-Houwink equation, as described in the ASTM standard test method D6474.

Unsaturations in the polyethylene homopolymer composition were determined by Fourier Transform Infrared Spectroscopy (FTIR) as per ASTM D3124-98. A Thermo-Nicolet 750 Magna-IR Spectrophotometer equipped with OMNIC version 7.2a software was used for the measurements.

Polyethylene composition density (g/cm³) was measured according to ASTM D792.

Melt indexes, I₂, I₅, I₆ and I₂₁ for the polyethylene composition were measured according to ASTM D1238 (when conducted at 190°C, using a 2.16 kg, a 5 kg, a 6.48 kg and a 21 kg weight, respectively).

Hexane extractables were determined according to ASTM D5227.

The so called "stress exponent" is defined as Log₁₀[I₆/I₂]/Log₁₀[6.48/2.16].

Shear viscosity was measured by using a Kayeness WinKARS Capillary Rheometer (model # D5052M-115). For the shear viscosity at lower shear rates, a die having a die diameter of 0.15 cm (0.06 inch) and LID ratio of 20 and an entrance angle of 180 degrees was used. For the shear viscosity at higher shear rates, a die having a die diameter of 0.030 cm (0.012 inch) and LID ratio of 20 was used.

The Shear Viscosity Ratio as the term is used in the present disclosure is defined as: η10/η1000 at 240°C. The η10 is the melt shear viscosity at the shear rate of 10 s⁻¹ and the η1000 is the melt shear viscosity at the shear rate of 1000 s⁻¹ measured at 240°C.

Plaques molded from the polyethylene compositions were tested according to the following ASTM methods: Bent Strip Environmental Stress Crack Resistance (ESCR) at Condition B at 10% IGEPAL at 50°C, ASTM D1693; notched Izod impact properties, ASTM D256; Flexural Properties, ASTM D 790; Tensile properties, ASTM D 638; Vicat softening point, ASTM D 1525; Heat deflection temperature, ASTM D 648.

Dynamic mechanical analyses were carried out with a rheometer, namely Rheometrics Dynamic Spectrometer (RDS-II) or Rheometrics SR5 or ATS Stresstech, on compression molded samples under nitrogen atmosphere at 190°C, using 25 mm diameter cone and plate geometry. The oscillatory shear experiments were done within the linear viscoelastic range of strain (10% strain) at frequencies from 0.05 to 100 rad/s. The values of storage modulus (G'), loss modulus (G"), complex modulus (G*) and complex viscosity (η*) were obtained as a function of frequency. The same rheological data can also be obtained by using a 25 mm diameter parallel plate geometry at 190°C under nitrogen atmosphere. The SHI(1,100) value is calculated according to the methods described in WO 2006/048253 and WO 2006/048254.

A polyethylene homopolymer composition was prepared in a dual reactor solution polymerization process using a phosphinimine catalyst, in a manner outlined in U.S. Pat. Pub. Nos. 2008/0118749 and 2015/0203671. As noted above, melt index (I₂) is generally inversely proportional to molecular weight for polyethylene resins. This was confirmed for homopolymer HDPE resins having a narrow molecular weight distribution (of less than 3) by preparing a plot of log(I₂) versus log(weight average molecular weight, Mw). In order to prepare this plot, the melt index (I₂) and weight average molecular Mw) of more than 15 different homopolymer HDPE resins was measured. These homopolymer HDPE resins had a narrow molecular weight distribution (less than 3) but had different Mw-ranging from about 30,000 to 150,000. (As will be appreciated by those skilled in the art, it is difficult to obtain reproducible I₂ values for polyethylene resins having a molecular weight which is outside of this range.) A log/log plot of these I₂ and Mw values was used to calculate the following relation between I₂ and Mw for such homopolymer HDPE resins: *I*₂=(1.774×10⁻¹⁹)×(*Mw*^{-3.86}). Extrapolation (based on the above relation) was used to estimate the I₂ values of the I) first ethylene homopolymer component and the II) second ethylene homopolymer component present in the polyethylene homopolymer composition. That is, the molecular weight of component I and component II was measured and the Mw values were used to estimate the I₂ values.

The polyethylene homopolymer composition, Example 1 had a density of 0.968 g/cm³, a melt index (I₂) of 6 g/10min, a molecular weight distribution (M_{W}/Mₙ) of 5.5, and was nucleated with 1,200 ppm (parts per million by weight) of HPN-20E which is commercially available from Milliken. The polyethylene homopolymer composition, Example 2 had a density of 0.967 g/cm³, a melt index (I₂) of 1.2 g/10min, a molecular weight distribution (M_{W}/Mₙ) of 8.2, and was nucleated with 1,200 ppm (parts per million by weight) of HPN-20E which is commercially available from Milliken. To nucleate the polyethylene homopolymer compositions, each was melt compounded with a HPN-20E masterbatch. Further polymer and plaque details for the nucleated polyethylene homopolymer compositions of Examples 1 and 2 are shown in Table 1. A GPC profile for polyethylene homopolymer composition of Example 1 is shown in Figure 8.

The polyethylene homopolymer composition of Example 2 had two distinct fractions which varied according to molecular weight. The low molecular weight fraction had a melt index which was estimated to be greater than about 5000 g/10min. The high molecular weight fraction had a melt index which was estimated to be less than about 0.1 g/10min.

**TABLE 1**

| Polymer and Plaque Data | | |
|---|---|---|
| Example No. | Example 1 | Example 2 |
| Nucleating Agent | 1200 ppm HPN-20E | 1200 ppm HPN-20E |
| Density (g/cm³) | 0.968 | 0.967 |

| Rheology/Flow Properties | | |
|---|---|---|
| Melt Index I₂ (g/10 min) | 6 | 1.2 |
| Melt Flow Ratio (I₂₁/I₂) | 32.6 | 55 |
| I₂₁ | 191 | 67.4 |
| I₅ | 16.8 | - |
| I₂₁/I₅ | 11.37 | - |
| Stress Exponent | 1.27 | 1.36 |
| Shear Viscosity at 10⁵ s⁻¹ (240°C, Pa-s) | 5.22 | - |
| Shear Viscosity Ratio η(10 s⁻¹)/ η (1000 s⁻¹) at 240°C | 3.93 | - |
| Shear Viscosity Ratio η (100 s⁻¹)/ η (100000 s⁻¹) at 240°C | 86.96 | - |

| GPC - Conventional | | |
|---|---|---|
| Mₙ | 12098 | 12063 (average) |
| M_{w} | 66127 | 98717 (average) |
| M_{z} | 169449 | 314939 (average) |
| Polydispersity Index (M_{w}/Mₙ) | 5.47 | 8.24 (average) |
| M_{Z}/M_{W} | 2.56 | 3.19 (average) |
| Branch Frequency - FTIR (uncorrected for chain end -CH₃) | | |
| Uncorrected SCB/1000C | - | - |
| Uncorrected comonomer content (mol%) | - | - |
| Internal unsaturation (/1000C) | 0.020 | 0.023 (average) |
| Side chain unsaturation (/1000C) | 0.000 | 0.000 (average) |
| Terminal unsaturation (/1000C) | 0.070 | 0.070 (average) |
| Comonomer | None | None |

| DSC | | |
|---|---|---|
| Primary Melting Peak (°C) | 133.45 | 133.97 |
| Heat of Fusion (J/g) | 251.90 | 243.8 |
| Crystallinity (%) | 86.85 | 84.07 |
| Environmental Stress Crack Resistance | | |
| ESCR Cond. B at 10 % (hours) | 4 | < 24 |

| Flexural Properties (Plaques) | | |
|---|---|---|
| Flex Secant Mod. 1% (MPa) | 2167 | 2046 |
| Flex Secant Mod. 2% (MPa) | 1755 | 1673 |
| Flex strength at break (MPa) | 52.2 | 51.3 |

| Impact Properties (Plaques) | | |
|---|---|---|
| Izod Impact (J/m) | 37.37 (0.70 ft-lb/in) | 125.97 (2.36 ft-lb/in) |

| Other Properties | | |
|---|---|---|
| Hexane Extractables (%) | 0.3 | 0.20 |
| VICAT Soft. Pt. (°C) - Plaque | 127 | 129.3 |
| Heat Deflection Temp. [°C] @ 455054 Pa (66 PSI) | 86 | 81.4 |

The polyethylene homopolymer compositions described above can be used in the formation of bottle closure assemblies. For example, bottle closure assemblies formed in part on in whole by compression molding and/or injection molding are contemplated.

In one embodiment, the bottle closure assembly comprises the polyethylene homopolymer composition described above and has good barrier properties. Hence, the bottle closure assemblies are well suited for sealing bottles, and containers, for examples bottles that may contain drinkable water, and other foodstuffs, including but not limited to liquids that are pressurized or non-pressurized.

In an embodiment of the disclosure a bottle closure assembly comprising a polyethylene homopolymer composition defined as above is prepared with a process comprising at least one compression molding step and/or at least one injection molding step.

### Preparation of a Tether Proxy for Deformation Testing

In order to provide a proxy of a tether portion which can be analyzed under conditions of shear, tear and tensile deformation, a closure (see Figures 9A and 9B) was compression molded as described below and then a tamper evident band, 10* (a proxy for a retaining means portion, 10) was formed by folding in and cutting the bottom circular edge of the closure using a folding/slitting machine with a modified blade, so that a tamper evident band (10*) which was joined to the cap portion (1) by several narrow ("pin" like) connecting sections (marked by the frangible line, 9 in Figures 9A and 9B) and one larger continuous section (i.e. continuous with a portion of the cap portion side wall), with the larger continuous section serving as a proxy for a tether (the area marked as 40 in Figures 9A and 9B). The larger continuous section or "tether proxy" section was designed to have an arcuate length of 6 mm. The "tether proxy" section had a cross-sectional width (or thickness) of 0.6 mm as determined by the dimensions of the closure mold used for the compression molding process (see below). The "tether proxy" section, or simply "tether proxy" 40 was then subjected to shear and tear deformations and to tensile deformation using a toque tester unit and tensile tester unit respectively (see below).

### Method of Making a Closure by Compression Molding

A SACMI Compression molding machine (model CCM24SB) and a PCO (plastic closure only) 1881 carbonated soft drink (CSD) closure mold was used to prepare the closures. Depending on material density, melt index (I₂) and chosen plug size, the closure weight varied between 2.15 g and 2.45 grams, with the process conditions adjusted to target a closure having a weight of about 2.3 grams. During the closure preparation process, the overall closure dimensions, such as, for the example, the closure diameter and the closure height were measured and maintained within desired "quality-controlled" specifications. Closures with poor circularity or with significant deformation away from the pre-defined specifications were rejected by an automatic vision system installed on the compression molding machine. Once the closure had been compression molded, a tamper evident band, inclusive of one larger continuous section (a proxy for a tether portion) was cut into the closure bottom edge using a folding/slitting machine fitted with a modified blade. Both experimental and simulated data confirmed that 99% of any closure weight differences were due to differences in the top panel thickness (of the cap portion, see Figure 9A) for each of the compression molded closures. For example, in the closures prepared by compression molding, the top panel thickness values of closures having a weight ranging from 2.15 grams to 2.45 grams were found to be slightly different, but each of the closure side wall thicknesses were found to be identical. As a result, any small differences in the compression molded cap weight were expected to have no impact on the dimensions of the tamper evident band or the tether proxy section (see above): in each case, the tether proxy had an arcuate length of 6 mm and a cross-sectional thickness of 0.6 mm.

Type 1 closures were compression molded from the polyethylene composition of Example 1 which had a melt index, I₂ of 6 g/10min and a density of 0.968 g/cm³.

Type 2 closures were compression molded from the polyethylene composition of Example 2 which had a melt index, I₂ of 1.2 g/10min and a density of 0.967 g/cm³.

Type 3 closures (Comparative) were compression molded from a unimodal polyethylene copolymer of ethylene and 1-butene having a melt index I₂ of 32 g/10min, a density of 0.951 g/cm³, and a molecular weight distribution, Mw/Mn of 2.88, and which is made using a Ziegler-Natta catalyst in a solution olefin polymerization process. This resin is commercially available from NOVA Chemicals Corporation as SCLAIR 2712.

The compression molding conditions used to make each closure type are provided in Table 2.

**TABLE 2**

| Compression Molding Processing Conditions | | | |
|---|---|---|---|
| Closure Type No. | 1 | 2 | 3 (Comparative) |
| Closure Weight (g) | 2.31 | 2.28 | 2.39 |
| BT1 Temp (°C) | 169 | 165 | 163 |
| BT2 Temp (°C) | 165 | 1701 | 164 |
| BT3 Temp (°C) | 164 | 175 | 163 |
| BT4 Temp (°C) | 164 | 175 | 161 |
| BT6 Temp (°C) | 168 | 175 | 170 |
| BT7 Temp (°C) | 182 | 185 | 187 |
| BT8 Temp (°C) | 184 | 185 | 184 |
| BT9 Temp (°C) | 184 | 185 | 184 |
| BT15 Temp (°C) | 170 | 175 | 170 |
| | | | |
| BT16 Temp (°C) | 165 | 179 | 165 |
| BT17 Temp (°C) | 175 | 182 | 174 |
| Metering Pump Set Press (bar) | 50 | 50 | 50 |
| Metering Pump Actual Press 1 (bar) IN | 51 | 32 | 50 |
| Metering Pump Actual Press 2 (bar) OUT | 60.2 | 137 | 30.6 |
| Pump Speed (%) | 56 | 59 | 57 |
| Hydraulic Operating Temp (°C) | 46 | 45 | 46 |
| Punch Cooling BT18 (°C) | 20 | 20 | 20 |
| Cavity Cooling BT19 (°C) | 20 | 20 | 20 |
| Ausiliari Cooling BT20 (°C) | 30 | 30 | 30 |

### Shear Deformation of a Tether Proxy

A TMS 5000 Torque Tester unit manufactured by Steinfurth was used to carry out the tether proxy shear deformation testing. The unit was adjusted to operate in "removal torque mode". A closure having a tether proxy section (area 40 in Figures 9A and 9B) with a 6 mm arcuate length and a 0.6 mm cross-sectional width connecting a cap portion (1) to a tamper evident band 10* (a proxy for a retaining means portion, 10) and suitable for mating with a PCO 1881 bottle finish was employed. Prior to testing, the tamper evident band (10*) was unfolded and then almost entirely removed, by cutting through the tamper evident band at a distance of approximately 2 mm from each end of the tether proxy section. The remaining portion of the tamper evident band (as shown in Figures 10A and 10B) then, comprises the tether proxy section having an arcuate length of 6 mm, and a further 2 mm arcuate length section on either side of the tether proxy section, all of which has a cross sectional width of 0.6 mm. Adding 2 mm to either side of the tether proxy section provides a larger surface area to grip when carrying out the shear deformation testing. In order to support the closure for testing in the Torque Tester unit, a modified tubular preform was used (item 45 in Figure 10B). The tubular pre-form 45 was made of polyethylene terephthalate and was modified to have smooth outer walls. Following this, a brass rod (50), having a diameter which fit snuggly within the preform (45) was inserted as a plug to afford rigidity to the pre-form and to prevent its deformation during testing. Next, the closure was placed on top of the pre-form and the remaining section of the tamper evident band (10*) was clamped to the preform using vice grips. The closure and preform were then mounted within the Torque Tester. The cap portion (1) was gripped from above within a suitably designed chuck and rotated at a removal torque speed of 0.8 rpm, relative to the clamped section of the tamper evident band, using the Torque Tester. The shear strength of the tether proxy (40) is defined as the maximum torque (in Newton meters, Nm) required to separate the cap portion (1) from the remaining section of the tamper evident band section (10*) by breaking the tether proxy (40). The reported shear strength in Table 3 is the average of at least 5 such shear deformation tests.

### Tear Deformation of a Tether Proxy

A TMS 5000 Torque Tester unit manufactured by Steinfurth was used to carry out the tether proxy shear deformation testing. The unit was adjusted to operate in "removal torque mode". A closure having a tether proxy section (area 40 in Figures 9A and 9B) with a 6 mm arcuate length and a 0.6 mm cross-sectional width connecting a cap portion (1) to a tamper evident band 10* (a proxy for a retaining means portion, 10) and suitable for mating with a PCO 1881 bottle finish was employed. In order to support the closure for testing in the Torque Tester unit, a modified tubular pre-form was used (item 45 in Figure 10C). The tubular pre-form 45 was made of polyethylene terephthalate and was modified to have smooth outer walls. Following this, a brass rod (50), having a diameter which fit snuggly within the pre-form (45) was inserted as a plug to afford rigidity to the pre-form and to prevent its deformation during testing. Next, the closure was placed on top of the preform. Prior to testing, the tamper evident band (10*) was deflected downward (on the opposite side of the tether proxy section) and away from the cap portion (1) as is shown in Figure 10C. The downward deflection breaks all the narrow pin sections (the frangible line 9 in Figures 9A and 9B) joining the top edge of the tamper evident band to the lower edge of the cap portion while leaving the larger continuous section, the tether proxy section (40), intact. The tamper evident band (10*) is deflected downward and away from the cap portion (1) until the top edge of the tamper evident band makes an angle with the lower edge of the cap portion of about 27 degrees, while the tether portion remains intact along its 6 mm arcuate length (see Figure 10C). The tamper evident band (10*) was then clamped to the pre-form in this downwardly deflected position using vice grips. The closure and pre-form were then mounted within the Torque Tester. The cap portion (1) was gripped from above within a suitably designed chuck and rotated at a removal torque speed of 0.8 rpm, relative to the clamped tamper evident band (10*), using the Torque Tester. The tear strength of the tether proxy (40) is defined as the maximum torque (in Newton meters, Nm) required to separate the cap portion (1) from the downwardly deflected tamper evident band (10*) by breaking the tether proxy (40). The reported tear strength in Table 3 is the average of at least 5 such tear deformation tests.

### Tensile Deformation of a Tether Proxy

Tensile deformation tests were performed using a tensile machine (an Instron 4204 universal tester, with a 1 KN (225 lbf) capacity load cell) with the crosshead velocity set at 50 mm/min. A closure having a tether proxy section (area 40 in Figures 9A and 9B) with a 6 mm arcuate length and a 0.6 mm cross-sectional width connecting a cap portion (1) to a tamper evident band 10* (a proxy for a retaining means portion, 10) and suitable for mating with a PCO 1881 bottle finish was employed. Prior to testing, the tamper evident band (10*) was unfolded and then almost entirely removed, by cutting through the tamper evident band at a distance of approximately 2 mm from each end of the tether proxy section (see Figures 10A, 11A and 11B). The remaining portion of the tamper evident band (as shown in Figures 10A, 11A and 11B) then, comprises the tether proxy section having an arcuate length of 6 mm, and a further 2 mm arcuate length section on either side of the tether proxy section, all of which has a cross sectional width of 0.6 mm. Adding 2 mm to either side of the tether proxy section provides a larger surface area to grip when carrying out the tensile deformation testing. For the tensile deformation test, most of the cap portion (1) was similarly cut away, leaving only a section of the cap portion side wall connected to the what was left of the tamper evident band (see Figures 11A and 11B). This "cut away" section of the closure was then mounted in the tensile tester, with the remaining cap portion side wall and the remaining tamper evident band each being secured with 1.3 cm (0.5-inch) wide steel serrated grips at a 0.64 cm (0.25-inch) grip separation. During the tensile testing, the remaining section of the cap portion (1) and the remaining section of the tamper evident band (10*) were drawn apart vertically. The tensile strength of the tether proxy (40) is defined as the maximum load (in Newtons, N) required to separate the remaining cap portion (1) from the remaining tamper evident band section (10*) by breaking the tether proxy (40). The reported tensile strength in Table 3 is the average of at least 5 such tensile deformation tests.

**TABLE 3**

| Average Shear, Tear and Tensile Deformation of a Tether Proxy | | | |
|---|---|---|---|
| Closure Type No. | 1 | 2 | 3 (Comparative) |
| Shear Strength (Nm) | 1.33 (11.80 inches.pounds) | 1.31 (11.62 inches.pounds) | 1.07 (9.43 inches.pounds) |
| Tear Strength (Nm) | 1.24 (10.96 inches.pounds) | 1.24 (11.00 inches.pounds) | 1.04 (9.18 inches.pounds) |
| Tensile Strength (N) | 160 (16315 grams.force) | 157 (15964 grams.force) | 126 (12800 grams.force) |

A person skilled in the art will recognize from the data provided in Table 3, that a tether proxy made using a polyethylene homopolymer composition according to the current disclosure may have a relatively good ability to resist shear, tear and tensile deformations (relative to a comparative tether proxy made from a unimodal polyethylene copolymer of ethylene and 1-butene, SCLAIR 2712). The data thus provides further evidence that the polyethylene homopolymer compositions described herein may be useful in the production of bottle closure assemblies, by preventing facile separation of a cap portion from a retaining collar portion or from a bottle, and by generally helping to prevent loss or disassociation of a cap portion (a potential plastic waste stream) from a bottle, where the cap portion could otherwise contribute to environmental waste concerns.

The present disclosure has been described with reference to certain details of particular embodiments thereof. It is not intended that such details be regarded as limitations upon the scope of the disclosure except insofar as and to the extent that they are included in the accompanying claims.

### INDUSTRIAL APPLICABILITY

The disclosure provides a bottle closure assembly which is made at least in part with a polyethylene homopolymer composition comprising a first ethylene homopolymer and a second ethylene homopolymer. The bottle closure assembly comprises a cap portion, an elongated tether portion and a retaining collar portion, where the elongated tether portion helps to prevent loss or disassociation of a cap portion from a bottle or container, which may otherwise contribute to environmental waste streams.

## Claims

1. A bottle closure assembly comprising:
a cap portion (1), an elongated tether portion (5), and a retaining collar portion (10), the cap portion being molded to reversibly engage and cover a bottle opening, the retaining collar portion being molded to irreversibly engage a bottle neck or an upper portion of a bottle, and where the elongated tether portion connects at least one point on the cap portion to at least one point on the retaining collar portion,
wherein the elongated tether portion (5) comprises a tether strip which is frangibly connected along a portion of its upper edge to a descending annular edge of the cap portion and which is frangibly connected along a portion of its lower edge to an upper annular edge of the retaining collar portion (10), the tether strip being integrally formed with and connected at one end to at least one point on the cap portion and integrally formed with and connected at another end to at least one point on the retaining collar portion, the frangible sections (20) being breakable when the cap portion is removed from a bottle opening, but where the cap portion remains connected to the retaining collar via the tether strip;
**characterized in that** the cap portion, the elongated tether portion, and the retaining collar portion are integrally molded from a polyethylene homopolymer composition comprising:
(I) 95 to 5 weight% of a first ethylene homopolymer having a density of from 0.950 to 0.975 g/cm³; and
(II) 5 to 95 weight% of a second ethylene homopolymer having a density of from 0.950 to 0.975 g/cm³, wherein the ratio of the melt index I₂ of the second ethylene homopolymer to the melt index I₂ of the first ethylene homopolymer is at least 10, wherein the density is measured according to ASTM D792 and the melt index I₂ is measured according to ASTM D1238 at 190°C, using a 2.16 kg weight.

2. The bottle closure assembly according to claim 1, wherein the first ethylene homopolymer has a weight average molecular weight, M_{W} that is higher than the weight average molecular weight, M_{W} of the second ethylene homopolymer, as determined by high temperature Gel Permeation Chromatography (GPC) with differential refractive index (DRI) detection using universal calibration ASTM D6474-99, with 1, 2, 4-trichlorobenzene as the mobile phase at 140°C.

3. The bottle closure assembly according to claim 1, wherein the first ethylene homopolymer has a melt index, I₂ of less than 1.0 g/10 min.

4. The bottle closure assembly according to claim 1, wherein the molecular weight distribution (Mw/Mn) of the first ethylene homopolymer is from 1.7 to 20.0, as determined by high temperature Gel Permeation Chromatography (GPC) with differential refractive index (DRI) detection using universal calibration ASTM D6474-99, with 1, 2, 4-trichlorobenzene as the mobile phase at 140°C.

5. The bottle closure assembly according to claim 1, wherein the second ethylene homopolymer has a melt index, I₂ of greater than about 5.0 g/10min.

6. The bottle closure assembly according to claim 1, wherein the molecular weight distribution (Mw/Mn) of the second ethylene homopolymer is from 1.7 to 20.0, as determined by high temperature Gel Permeation Chromatography (GPC) with differential refractive index (DRI) detection using universal calibration ASTM D6474-99, with 1, 2, 4-trichlorobenzene as the mobile phase at 140°C.

7. The bottle closure assembly according to claim 1, wherein the polyethylene homopolymer composition has a bimodal profile or a multimodal profile in a gel permeation chromatograph.

8. The bottle closure assembly according to claim 1, wherein the polyethylene homopolymer composition comprises one or more than one nucleating agent.

## Patentansprüche

1. Flaschenverschlussanordnung, die Folgendes umfasst:
einen Kappenabschnitt (1), einen länglichen Halteabschnitt (5) und einen Rückhaltemanschettenabschnitt (10), wobei der Kappenabschnitt geformt ist, um mit einer Flaschenöffnung reversibel in Eingriff zu gelangen und diese abzudecken, wobei der Rückhaltemanschettenabschnitt geformt ist, um irreversibel mit einem Flaschenhals oder einem oberen Abschnitt einer Flasche in Eingriff zu gelangen, und wobei der längliche Halteabschnitt zumindest einen Punkt auf dem Kappenabschnitt mit zumindest einem Punkt auf dem Rückhaltemanschettenabschnitt verbindet,
wobei der längliche Halteabschnitt (5) einen Haltestreifen umfasst, der entlang eines Abschnitts seiner oberen Kante mit einer abwärtsverlaufenden ringförmigen Kante des Kappenabschnitts brechbar verbunden ist und entlang eines Abschnitts seiner unteren Kante mit einer oberen ringförmigen Kante des Rückhaltemanschettenabschnitts (10) brechbar verbunden ist, wobei der Haltestreifen mit zumindest einem Punkt auf dem Kappenabschnitt einstückig ausgebildet und an einem Ende mit diesem verbunden ist und mit zumindest einem Punkt auf dem Rückhaltemanschettenabschnitt einstückig ausgebildet und an einem anderen Ende mit diesem verbunden ist, wobei die brechbaren Abschnitte (20) brechbar sind, wenn der Kappenabschnitt von einer Flaschenöffnung entfernt wird, der Kappenabschnitt jedoch über den Haltestreifen mit der Rückhaltemanschette verbunden bleibt;
**dadurch gekennzeichnet, dass** der Kappenabschnitt, der längliche Halteabschnitt und der Rückhaltemanschettenabschnitt einstückig aus einer Polyethylenhomopolymerzusammensetzung geformt ist, die Folgendes umfasst:
(I) 95 bis 5 Gew.-% eines ersten Ethylenhomopolymers mit einer Dichte von 0,950 bis 0,975 g/cm³; und
(II) 5 bis 95 Gew.-% eines zweiten Ethylenhomopolymers mit einer Dichte von 0,950 bis 0,975 g/cm³, wobei das Verhältnis des Schmelzindexes I₂ des zweiten Ethylenhomopolymers zum Schmelzindex I₂ des ersten Ethylenhomopolymers zumindest 10 ist, wobei die Dichte gemäß ASTM D792 gemessen wird und der Schmelzindex I₂ gemäß ASTM D1238 bei 190°C unter Verwendung eines Gewichts von 2,16 kg gemessen wird.

2. Flaschenverschlussanordnung nach Anspruch 1, wobei das erste Ethylenhomopolymer ein gewichtsmittleres Molekulargewicht M_{W} aufweist, das höher ist als das gewichtsmittlere Molekulargewicht M_{W} des zweiten Ethylenhomopolymers, wie durch Hochtemperatur-Gelpermeationschromatographie (GPC) mit Differential-Brechungsindex-(DRI-) Detektion unter Verwendung von universeller Kalibration ASTM D6474-99 mit 1,2,4-Trichlorbenzol als mobile Phase bei 140 °C bestimmt.

3. Flaschenverschlussanordnung nach Anspruch 1, wobei das erste Ethylenhomopolymer einen Schmelzindex I₂ von kleiner als 1,0 g/10 min aufweist.

4. Flaschenverschlussanordnung nach Anspruch 1, wobei die Molekulargewichtverteilung (Mw/Mn) des ersten Ethylenghomopolymers 1,7 bis 20,0 beträgt, wie durch Hochtemperatur-Gelpermeationschromatographie (GPC) mit Differential-Brechungsindex- (DRI-) Detektion unter Verwendung von universeller Kalibration ASTM D6474-99 mit 1,2,4-Trichlorbenzol als mobile Phase bei 140 °C bestimmt.

5. Flaschenverschlussanordnung nach Anspruch 1, wobei das zweite Ethylenhomopolymer einen Schmelzindex I₂ von größer als etwa 5,0 g/10 min aufweist.

6. Flaschenverschlussanordnung nach Anspruch 1, wobei die Molekulargewichtverteilung (Mw/Mn) des zweiten Ethylenghomopolymers 1,7 bis 20,0 beträgt, wie durch Hochtemperatur-Gelpermeationschromatographie (GPC) mit Differential-Brechungsindex- (DRI-) Detektion unter Verwendung von universeller Kalibration ASTM D6474-99 mit 1,2,4-Trichlorbenzol als mobile Phase bei 140 °C bestimmt.

7. Flaschenverschlussanordnung nach Anspruch 1, wobei die Polyethylenhomopolymerzusammensetzung in einem Gelpermeationschromatographen ein bimodales Profil oder ein multimodales Profil aufweist.

8. Flaschenverschlussanordnung nach Anspruch 1, wobei die Polyethylenhomopolymerzusammensetzung ein oder mehrere Nukleierungsmittel umfasst.

## Revendications

1. Ensemble de fermeture de bouteille comprenant :
une partie de bouchon (1), une partie d'attache allongée (5) et une partie de collier de retenue (10), la partie de bouchon étant moulée pour venir en prise de manière réversible avec une ouverture de bouteille et la recouvrir, la partie de collier de retenue étant moulée pour venir en prise de manière irréversible avec un goulot de bouteille ou une partie supérieure d'une bouteille, et où la partie d'attache allongée relie au moins un point sur la partie de bouchon à au moins un point sur la partie de collier de retenue,
dans lequel la partie d'attache allongée (5) comprend une bande d'attache qui est reliée de manière frangible le long d'une partie de son bord supérieur à un bord annulaire descendant de la partie de bouchon et qui est reliée de manière frangible le long d'une partie de son bord inférieur à un bord annulaire supérieur de la partie de collier de retenue (10), la bande d'attache étant formée d'un seul tenant avec et reliée au niveau d'une extrémité à au moins un point sur la partie de bouchon et formée d'un seul tenant avec et reliée au niveau d'une autre extrémité à au moins un point sur la partie de collier de retenue, les sections frangibles (20) pouvant être rompues lorsque la partie de bouchon est retirée d'une ouverture de bouteille, mais la partie de bouchon restant reliée au collier de retenue via la bande d'attache ;
**caractérisé en ce que** la partie de bouchon, la partie d'attache allongée et la partie de collier de retenue sont moulées d'un seul tenant à partir d'une composition d'homopolymères de polyéthylène comprenant :
(I) (I) de 95 à 5 % en poids d'un premier homopolymère d'éthylène présentant une densité de 0,950 à 0,975 g/cm³ ; et
(II) (II) de 5 à 95 % en poids d'un second homopolymère d'éthylène présentant une densité de 0,950 à 0,975 g/cm³, dans lequel le rapport entre l'indice de fusion l₂ du second homopolymère d'éthylène et l'indice de fusion l₂ du premier homopolymère d'éthylène est d'au moins 10, dans lequel la densité est mesurée selon ASTM D792 et l'indice de fusion l₂ est mesuré selon ASTM D1238 à 190°C, en utilisant un poids de 2,16 kg.

2. Ensemble de fermeture de bouteille selon la revendication 1, dans lequel le premier homopolymère d'éthylène présente un poids moléculaire moyen en poids, Mw, qui est supérieur au poids moléculaire moyen en poids, Mw, du second homopolymère d'éthylène, tel que déterminé par chromatographie de perméation de gel (GPC) à haute température avec détection d'indice de réfraction différentiel (DRI) en utilisant un étalonnage universel ASTM D6474-99, avec du 1,2,4-trichlorobenzène comme phase mobile à 140°C.

3. Ensemble de fermeture de bouteille selon la revendication 1, dans lequel le premier homopolymère d'éthylène présente un indice de fusion, l₂, inférieur à 1,0 g/10 min.

4. Ensemble de fermeture de bouteille selon la revendication 1, dans lequel la distribution de poids moléculaire (Mw/Mn) du premier homopolymère d'éthylène est de 1,7 à 20,0, telle que déterminée par chromatographie de perméation de gel (GPC) à haute température avec détection d'indice de réfraction différentiel (DRI) en utilisant un étalonnage universel ASTM D6474-99, avec du 1,2,4-trichlorobenzène comme phase mobile à 140°C.

5. Ensemble de fermeture de bouteille selon la revendication 1, dans lequel le second homopolymère d'éthylène présente un indice de fusion l₂ supérieur à environ 5,0 g/10 min.

6. Ensemble de fermeture de bouteille selon la revendication 1, dans lequel la distribution de poids moléculaire (Mw/Mn) du second homopolymère d'éthylène est de 1,7 à 20,0, telle que déterminée par chromatographie de perméation de gel (GPC) à haute température avec détection d'indice de réfraction différentiel (DRI) en utilisant un étalonnage universel ASTM D6474-99, avec du 1,2,4-trichlorobenzène comme phase mobile à 140°C.

7. Ensemble de fermeture de bouteille selon la revendication 1, dans lequel la composition d'homopolymères de polyéthylène présente un profil bimodal ou un profil multimodal dans un chromatographe à perméation de gel.

8. Ensemble de fermeture de bouteille selon la revendication 1, dans lequel la composition d'homopolymères de polyéthylène comprend un ou plusieurs agents de nucléation.
